## Europäisches Patentamt
## European Patent Office
## Office européen des brevets

(19)

(11) Numéro de publication: **0 064 891**
**B1**

(12)

# FASCICULE DE BREVET EUROPEEN

(45) Date de publication du fascicule du brevet:
**26.02.86**

(51) Int. Cl.⁴: **B 23 K 9/12**

(21) Numéro de dépôt: **82400643.1**

(22) Date de dépôt: **07.04.82**

---

(54) **Perfectionnements aux dispositifs de soudage mettant en oeuvre des décharges électriques, notamment pour le soudage à l'arc.**

---

(30) Priorité: **09.04.81 FR 8107164**
**16.09.81 FR 8117517**
**02.11.81 FR 8120531**
**23.12.81 FR 8124180**

(43) Date de publication de la demande:
**17.11.82 Bulletin 82/46**

(45) Mention de la délivrance du brevet:
**26.02.86 Bulletin 86/9**

(84) Etats contractants désignés:
**AT BE CH DE GB IT LI LU NL SE**

(56) Documents cités:
**DE - A - 2 300 366**
**US - A - 2 735 920**
**US - A - 2 863 984**
**US - A - 2 992 320**
**US - A - 3 142 746**
**US - A - 3 239 648**
**US - A - 3 536 888**
**US - A - 3 590 212**
**US - A - 4 225 772**

(73) Titulaire: **Prunier, Robert, Route de Semur, Crepand**
**F-21500 Montbard (FR)**

(72) Inventeur: **Prunier, Robert, Route de Semur, Crepand**
**F-21500 Montbard (FR)**

(74) Mandataire: **Netter, André et al, Cabinet NETTER 40, rue Vignon, F-75009 Paris (FR)**

---

LIBER, STOCKHOLM 1986

## Description

L'invention concerne les dispositifs ou installations de soudage dans lesquels on utilise la chaleur produite par une décharge électrique dans un gaz, et notamment un arc électrique, pour porter à une température élevée une zone de métal sur laquelle on désire réaliser une soudure en y coulant un métal d'apport.

Dans certains procédés de soudage appartenant à cette catégorie, le métal d'apport est fourni sous la forme d'un fil qui est déroulé à partir d'une bobine au fur et à mesure qu'il est consommé. Suivant le type de procédé, ce fil peut en même temps servir ou non d'électrode pour l'entretien de l'arc électrique.

Afin de déterminer avec précision l'emplacement de la soudure, l'extrémité du fil de métal d'apport doit être guidée vis-à-vis de la zone à souder. En outre, son avancement régulier et sans à-coup doit être assuré au cours de la progression de la soudure.

Traditionnellement, on utilise, afin de guider le fil de métal d'apport, un tube percé d'un canal à l'extrémité postérieure duquel pénètre ce fil. A l'axtrémité antérieure de ce canal, le fil fait saillie hors du tube sur une petite longueur, de façon à être présenté dans une position appropriée face à la zone de soudure.

Dans de nombreux procédés, la machine de soudage comprend en outre une buse de soufflage d'un gaz, inerte ou actif, sur la zone de soudure, de façon à maintenir celle-ci dans une atmosphère contrôlée. On évite ainsi toute réaction indésirable des matières en fusion avec l'air ambiant ou éventuellement avec des gaz dégagés au cours de l'opération de soudage.

Dans les machines de soudage perfectionnées, l'installation d'amenée de métal d'apport dans la zone de la soudure et la buse de soufflage de gaz sont réglables en position par rapport à la soudure sous la commande d'une installation de régulation automatique. Celle-ci permet notamment de maintenir certains paramètres de l'opération de soudage, par exemple le courant d'arc, dans des limites prescrites, de façon à optimiser les conditions opératoires.

De telles installations connaissent un développement croissant pour la réalisation de soudures sur des pièces de hautes performances dont la qualité doit être maintenue à un niveau très élevé avec une excellente fiabilité. Elles permettent en particulier de souder entre elles des pièces réalisées dans des matériaux habituellement difficiles à travailler et qui ne se mélangent pas aisément à d'autres constituants.

Toutefois, ces installations sont sujettes à de nombreuses difficultés de fonctionnement. En particulier, on a constaté que la face antérieure des tubes de guidage du métal d'apport était sujette à une détérioration rapide et à toutes sortes d'incidents provoquant un collage du fil de métal d'apport sur le tube de guidage. Il en résulte que la qualité des soudures effectuées se degrade rapidement, les mécanismes de régulation automatique étant perturbés dans leur fonctionnement. Ces difficultés amènent à prévoir le remplacement fréquent des tubes de guidage, opération coûteuse en raison de l'interruption des opérations d'usinage qu'elle impose et de la consommation élevée du nombre de tubes qu'elle entraîne.

Pour éviter cet inconvénient, US-A-3 590 212 prévoit d'appliquer à la surface du tube de guidage un revêtement d'aluminium anodisé. Les projections de métal fordu n'adhérent pas sur l'alumine qui constitue la couche superficiclle du tube ainsi traité.

On a cependant constaté qu'en raison de la différence entre le coefficient de dilatation thermique du matériau de base du tube, qui est un métal tel que le cuivre, etcelui de l'alumine, le rêvetement tend à se craqueler par suite des cycles thermiques auxquels est exposée l'extrémité du tube, proche de la zone de soudure. L'allongement de la durée de vie du tube n'est donc pas aussi importante qu'on pouvait l'espérer.

DE-A-2 300 366 propose de mettre en place on avant du tube de guidage une garniture de matériau anti-adhérent maintenue par un capot fixé à l'extrémité du tube. Cette disposition a elle seule ne permit pas un bon guidage du fil de métal d'apport, ni surtout une bonne alimentation en courant de celui-ci.

Enfin, dans le cas où les tubes de guidage sont également utilisés pour alimenter en courant électrique le fil de métal d'apport, on a également constaté une détérioration rapide de la qualité du contact électrique entre ces éléments entraînant avec elle toutes sortes d'incidents de fonctionnement de l'appareil de soudage et une dégradation rapide de la régularité et de la qualité des soudures obtenues.

On a déjà cherché à améliorer ce contact électrique en équipant les tubes de guidage, dits également tubes contact, de dispositifs de rattrapage de jeu qui permettent d'appliquer à frottement doux le fil de métal d'apport contre la paroi interne du canal, quel que soit le degré d'usure de celle-ci. De tels dispositifs sont décrits par exemple dans US-A-2 863 984 et dans US-A-3 142 746. Cependant, les dispositifs préconisés jusqu'à présent n'ont jamais eu le succes escompté. Ceci résulte, soit de la complexité des mécanismes prévus, soit du fait que les composants de ces mécanismes résistent mal aux températures très élevées de fonctionnement des tubes de contact, soit encore du fait que ces mécanismes tendent eux-mêmes à donner naissance à des arcs électriques parasites qui tendent à les détruire.

Au regard de ces difficultés, la présente invention a pour but de fournir des installations de soudage, et notamment des composants pour les parties de celles-ci qui se trouvent au voisinage immédiat de la soudure en formation, dont la longévité soit grandement accrue par rapport aux dispositifs existants et qui permettent, pour un coût raisonnable, d'améliorer de façon substantielle la qualité des soudures réalisées en maintenant la réuglarité de ces dernières pendant des périodes de fonctionnement prolongées avec les mêmes composants.

A cet effet, selon un de ses aspects, l'invention vise une torche pour une machine de soudage par décharges électriques munie d'un tube de guidage comprenant un corps métallique présentant un canal longitudinal pour guider un fil de métal d'apport et fournir un courant de soudage au fil de métal d'apport par contact avec les parois dudit canal, ledit canal débouchant dans une face frontale dudit corps métallique, laquelle est recouverte par une pièce en matériau céramique présentant un canal aligné avec le canal dudit corps métallique , ledit matériau céramique étant non adhérent vis-à-vis des projections de métal provenant du bain de soudure se produisant lors du soudage, caractérisée en ce que ladite pièce dont le canal a le mêdiamètre que le canal du corps est maintenue en contact avec ladite face frontale par une gaine protectrice ajustée sur l'extrémité frontale dudit corps, et en ce que le corps métallique comporte des moyens de rattrapage de jeu entre le fil de métal d'apport et la surface interne du canal pour maintenir un contact à frottement constant entre eux, lesdits moyens comprenant un élément élastique et la gaine couvrant le tube autour desdits moyens et servant de butée pour ledit élément élastique.

De préférence, au moins la surface extérieure de la gaine est constituée par un matériau réfractaire aux très hautes températures et électriquement isolant tel qu'une céramique, par exemple à base d'alumine ou de bioxyde de chrome.

De nombreux essais ont permis de constater que ces dispositions empêchaient la dégradation de la face frontale des tubes contact et parmettaient d'accroître leur durée d'utilisation dans des proportions considé- . rables tout en améliorant la qualité et la régularité des soudures obtenues.

L'observation des conditions opératoires d'un tube contact a montré en effet que la partir frontale de celui-ci reçoit, en provenance de la zone de soudure, des projections de métal en fusion, tant sous la forme du métal d'apport que du metal de base, qui tendent à se déposer, en l'absence de précautions particulières, sur la surface de ca tube et à s'y amalgamer. Elles sont notamment capables de provoquer des collages entre le fil de métal d'apport et la face avant du tube, à la sortie du canal de güidage de ce dernier. Il en résulte une résistance au mouvement d'avance régulier du fil qui peut aller jusqu'au blocage total de ce dernier.

En outre, lorsque le tube de contact est utilisé dans des dispositifs de torche dans lesquels il est monté à l'interieur d'une buse permettant de souffler un courant de gaz sur le bain de soudure, les accumulations de métal projeté à la surface extérieure du tube favorisent la formation d'arcs parasitaires ou secondaires entre ce tube qui, dans le cas de tube contact se trouve placé sous tension, et la base, laquelle est en général à la masse de l'installation.

Ces arcs favorisent l'érosion du métal à la surface du tube et peuvent même provoquer la formation d'une soudure entre le fil de métal d'apport et son point de sortie à l'avant du tube.

La formation de ces arcs secondaires perturbe également le fonctionnement des dispositifs de régulation des machines de soudage automatique qui réagissent à l'intensité du courant générateur d'arc électrique, notamment en vue du réglage de la hauteur de l'arc de soudage.

Enfin, l'augmentation du volume de l'extrémité du tube de contact sous l'effet des projections de métal qui y adhèrent tend à diminuer l'espace d'échappement disponible pour le gaz amené à la buse. Il an résulte une diminution du debit de ce dernier qui affecte la composition de l'atmosphere environnant le bain de soudure et par conséquent la qualité du résultat obtenu. Grâce à la disposition d'un moyen d'isolement anti-adhésif à la surface frontale externe du tube, on empêche les projections de métal en fusion en provenance du bain de soudure d'adhérer sur le tube et notamment de favoriser la formation de collages. On empeche également, grâce eux propriétés d'isolation électrique de la gaine, la possibilité d'amorçage d'arcs secondaires entre le tube contact et la buse externe. On élimine égelement les accumulations de matières dans l'ouverture de soufflage des gaz avec les effets nuisibles qui les accompagnent.

Les caractéristiques de soudabilité de l'embout en céramique avec les métaux d'apport couramment utilisés sont pratiquement nulles. Grâce à cet embout, on parvient à neutraliser les effets d'un blocage accidentel de l'extrémité du fil de métal d'apport en évitant que le métal en fusion ne remonte en direction du tube de guidage en provoqvant sa détérioration en raison de la température extrêmement élevée du métal fondu. On peut avantageusement donner à cet embout une forme effilée vers l'avant.

Selon un autre aspect, l'invention a également pour objet une torche pour une machine de soudage par décharges électriques munie d'un tube pour le guidage d'un fil de métal d'apport, ainsi qu'un tel tube de guidage, ce tube comprenant un corps tubulaire présentent un canal axial pour guider le fil et des moyens pour presser le fil contre la peroi du canal, lesdits moyens de pression comprenant au moins une bille montée mobile dans un passage du corps tubulaire transversal au canal et débouchant dans le canal et dans la paroi externe du corps, la bille étant sollicitée par des moyens élastiques pour faire saillie dans le canal et appliquer le fil contre la paroi opposée du canal, caractérisée en ce gue lesdits moyens élastiques comprennent un ressort de compression conique entièrement logé dans ledit passage transversal, leguel a une forme tronconique serétrécissant en direction du canal, et en ce que ledit passage débouche dans la paroi externe du corps de tube par une ouverture fermée par une gaine enfilée autour du tube, contre laquelle bute la spire d'extrémité large du ressort.

Contrairement à un ressort à spires cylindriques, dont la hauteur minimale de compression est égale à la somme des épaisseurs des spires qui le composent, un ressort conique peut être comprimé dans une épaisseur inférieure à une telle limite par l'effet de l'emboîtement de ses spires les unes dans les autres. Cette caractéristique permet de le monter avec une bille dans un passage à travers la paroi séparant le canal interne du tube et sa surface externe, même lorsque l'épaisseur de cette paroi est très faible. Il devient alors possible de monter le dispositif à rattrapage de jeu sans nécessiter de saillies ou protubérances à la surface externe du tube. En particulier, il est possible de maintenir le ressort en compression dans ledit passage en laissant buter son extrémité externe contre une douille ou gaine enfilée sur la partie terminale du tube et possédant des propriétés évoquées précédemment en ce qui concerne la gaine de protection assurant le maintien de la piece en céramique sur la face frontale du tube contact.

Selon un mode de réalisation préféré, on utilise des billes en un matériau électriquement isolant au moins a leur surface et on revêt également la surface des ressorts d'un tel matériau. On élimine ainsi toute possibilité d'amorçage d'arc électrique à partir des pièces mobiles du dispositif de rattrapage de jeu ainsi constitué. Selon un autre aspect de l'invention, on prévoit une torche pour une machine de soudage par décharges électriques, comprenant une buse pour diriger un courant de gaz sur une soudure,disposée autour d'un tube de guidage qui comprend un corps métallique muni d'un canal longitudinal pour guider un fil de métal d'apport, ledit canal longitudinal débouchant dans une face frontale dudit tube, la partie avant du corps métallique étant munie d'un recouvrement de surface protecteur en un matériau non adhérent vis-à-vis des projections de métal provenant du bain de soudure lors du soudage, caractérisée en ce que le tube de guidage est contenu à l'intérieur d'une chambre délimitée par la buse, et que l'extrémité de cette dernière est rétrécie vers l'intérieur autour de la partie terminale du tube de guidage.

Le matériau de recouvrement est de préférence un matériau céramique tel que l'alumine, et le recouvrement peut alors être obtenu par dépôt électrolytique d'une couche d'aluminium sur le corps métallique suivi d'une oxidation électrolytique de ladite couche d'aluminium. L'invention vise également un tube de guidage conforme à la revendication 14.

D'autres explications et une description de modes de réalisation non limitatifs sont données ci-après en référence aux dessins annexés, sur lesquels :

La figure 1 est une vue schématique d'une installation de soudage équipée d'un tube de guidage d'un fil de métal d'apport.

La figure 2 est une vue schématique partielle d'une installation de soudage mettant en oeuvre un autre procédé que celui de la figure 1.

La figure 3 est une vue en coupe éclatée d'une forme de réalisation d'un tube contact pour un fil de métal d'apport.

La figure 4 illustre en coupe longitudinale une variante de réalisation de l'extrémité antérieure d'un tube conforme à la figure 3.

La figure 5 montre en coupe longitudinale un embout réfractaire.

La figure 6 illustre en coupe longitudinale une autre forme d'exécution d'un tube de guidage de fil de métal d'apport.

La figure 7 est une vue partielle d'une autre variante.

La figure 8 est une vue de détail agrandie d'un partie du dispositif de la figure 3.

La figure 9 illustre une forme de protection de la partie frontale d'un tube contact.

La figure 10 illustre un tube contact de l'art antérieur.

La figure 11 illustre une forme de réalisation d'une protection du tube contact de la figure 10.

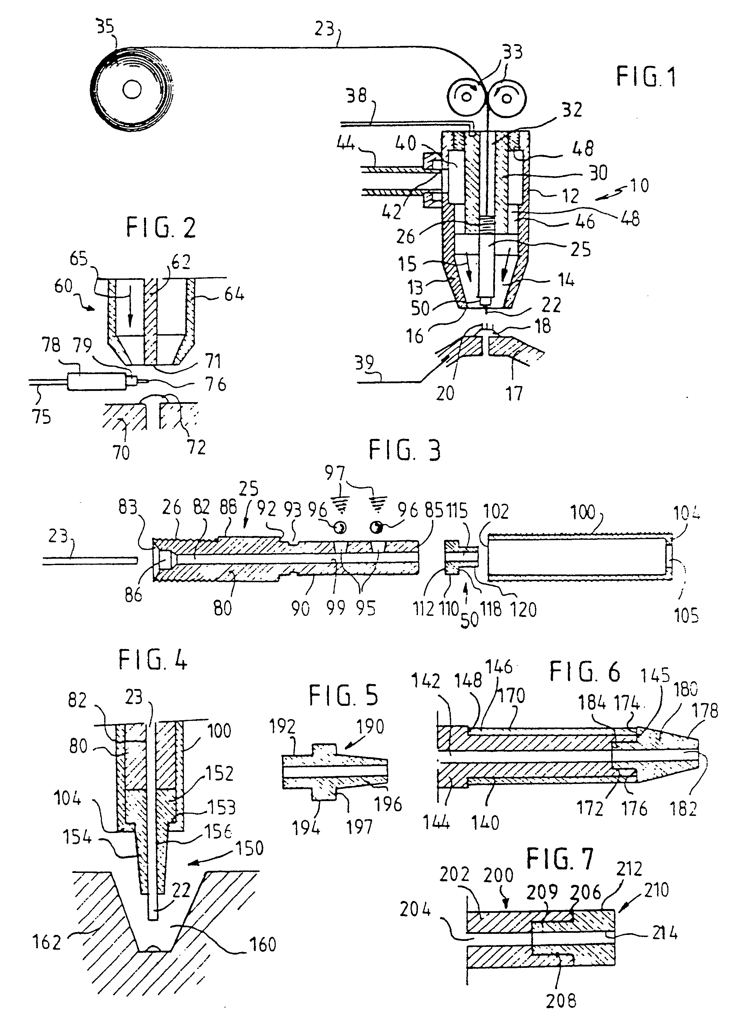

Une machine de soudage à l'arc électrique 10 (figure 1) fonctionnant selon le piocédé MIG (Metal Inert Gas) ou MAG (Metal Active Gas) comprend une tête métallique 12 dont l'extrémité inférieure se termine en forme de buse 13, définissant un espace interne 14 dans lequel peuvent circuler des gaz dans le sens indiqué par la flèche 15. Ces gaz sont inertes ou actifs à l'égard du bain de soudure en fusion selon la technique mise en oeuvre pour réaliser cette dernière. A son extiémité inférieure 16, la buse 13 s'ouvre au-dessus d'une pièce d'ouvrage 17 sur laquelle un cordon de soudure 18 est en cours de réalisation. Un arc électrique 20 est entretenu entre la pièce 17 et une extrémité 22 d'un fil de métal d'apport 23,qui maintient à la fois la zone de soudure 18 à une température très élevée et provoque la fusion progressive de l'extrémité du métal d'apport 22.

Le fil cylindrique de métal d'apport 23 est maintenu, au voisinage de son extrémité 22, et guidé par un tube 25, dit tube contact, qui est monté axialement à l'intérieur de la chambre l4 délimitée par la buse 13. Ce tube est vissé par un filetage 26 à son extrémité supérieure dans un support 30 conducteur traversé par un passage longitudinal 32. Le fil 23 est avancé au fur et à mesure de la consommation de métal d'apport à l'extrémité d'électrode 22 par deux galets entraîneurs 33 qui le déroulent à partir d'une bobine 35 et le font avancer à l'intérieur du passage longitudinal 32 jusque dans le canal traversant le tube contact 25 à l'avant duquel son extrémité 22 fait saillie. Le support cylindrique 30 est alimenté électriquement par un câle 38 connecté à une source d'énergie électrique à laquelle est raccordée la pièce 17 par un conducteur 39. Le canal interne du tube contact 25 est d'un diamètre calibré à celui du fil de métal d'apport 23. Il assure le guidage de ce dernier et son alimentation électrique par contact contre sa paroi comme il sera exposé plus en détail ci-après.

Autour du support 30, le corps de la tête 12 définit une chambre annulaire 40 comportant une ouverture d'admission 42, dans une des parois latérales de la tête 12, à laquelle peut être raccordée une conduite 44 d'alimentation en gaz approprié à la technique de soudage adoptée. La chambre annulaire 40 est reliée à la chambre 14 dans la buse 13 par des canaux longitudinaux 46 à travers un matériau isolant 48 séparant le support 30 du corps de tête 12.

L'extrémité inféieure de la buse 13 est légèrement rétrécie vers son axe, son ouverture circulaire 16 entourant un embout neutralisant en céramique 50 dont il sera question plus en détail ci-après et fixé à l'extrémité antérieure du tube 25, d'où sort l'extrémité 22 du fil d'apport 23. L'arc électrique 20 et la zone de soudure 18 sont baignés par le gaz insufflé par la buse 13 dans le sens des flèches 15.

Sur la figure 2, est représenté un dispositif de soudage à l'arc électrique 60 pour la mise en oeuvre d'un procédé connu sous le nom de TIG (Tungsten Inert Gaz). Une électrode 62 est disposée axialement à l'intéireur d'une buse 64 par laquelle est soufflé un gaz dans le sens de la flèche 65 en direction d'une pièce à souder 70. L'extrémité 71 de l'électrode en tungstène 62 est disposée dans l'embouchure de la buse 64. L'électrode 62 et la pièce sont alimentées sous tension de telle façon qu'un arc électrique soit entretenu entre l'extrémité 71 de

**0 064 891**

l'électrode et la zone de soudure 72 à la surface de la pièce. Un métal d'apport est amené sous forme d'un fil 75 dont l'extrémité 76 est avancée dans la zone d'arc transversalement à l'électrode 62 à la sortie de la buse 64. Ce fil de métal d'apport 75 est guidé par un canal pratiqué dans un tube de guidage 78 tarminé à sa partie antérieure par un embout neutralisant 79 en céramique.

Le tube contact 25 (figure 3) comprend un corps tubulaire 80 en un métal conducteur de l'électricité tel que du cuivre, qui est traversé par un canal cylindrique 82 longitudinal reliant ses faces postérieuer et antérieurs 83 et 85 respectivement. Le diamètre de ce canal est uniforme sauf dans la partie postérieure du tube où il s'élargit an 86, la face postérieure 83 ayant une forme évasée pour faciliter l'introduction du fil de métal d'apport 23. En suivant ce tube depuis son extrémité postérieure 83 vers son extrémité antérieure 85, on rencontre tout d'abord, à sa surface extérieura, le filetage 26 puis una portée cylindrique 88 pourvue de deux méplats diamétralement opposés permettant le serrage du tube à l'aide d'une clé, puis une partie cylindrique antérieure 90 raccordée à la partie 88 par un épaulement 92. Une gorge 93 est taillée dans la partie 90 à proximité de l'épaulement 92.

Deux passages tronconiques 95 sont pratiqués dans une direction perpendiculaire au canal 82 dans lequel ils débouchent à leur extrémité étroite, leur extrémité large étant taillée dans la surface 90 dans une zone environ à mi-chemin entre l'épaulement 92 et l'extrémité antérieure 85. Ces passages 95 sont alignés selon une génératrice du tube. Dans chacun d'eux est montée une bille respective 96 dont le diamètre est légèrement supérieur au petit diamètre das passages 95 respectifs. Chacune de ces billes est sollicitée vers une position où alle fait saillie dans le canal 82 par un ressort de compression à spires coniques 97 dont la spire de petit diamètre est en contact avec la bille. La spire de grand diamètre est logée dans l'ouverture de grand diamètre du passage 95. Elle y est maintenue par une gaine cylindrique l00 , dont le diamètre interne est sensiblement égal au diamètre externe de la partie 90. Cette gaine peut étre emmanchée autour de la surface cylindrique 90 en enfilant son extrémité antérieure l02 à l'avant du corps tubulaire 80. Sa longueur est telle que l'extrémité l02 vienne en butée contre l'épaulement 92. Son épaisstur est sensiblement égale à la hauteur de cet épaulement 92 de façon que, lorsque la gaine l00 est enfilée autour de la partie cylindrique externe 90 du corps de tube 80, la surface externe de la gaine l00 soit en prolongement de la surface cylindrique externe 88 du tube.

L'embout neutralisant 50 est une pièce de céramique monobloc qui comprend deux parties cylindriques coaxiales juxtaposées respectivement postérieure 110 et antérieure 120, traversées par un canal axial 115 de même diamètre que le canal 82. Dans le tube 25 assemblé, la face postérieure 112 de l'embout 50 est appliquée contre la face antérieure 85 du corps de tube 80. Sa partie cylindrique 110, dont le diamètre est sensiblement égal au diamètre interne de la gaine 100, est logée à l'extrémité avant de cette dernière. Le diamètre de la partie cylindrique 120 est inférieur à celui de la partie 110, ces deux parties se raccordant l'une à l'autre par un épaulement 115. A son extrémité antérieure, la gaine 110 présente un bord rabattu 104 contre lequel peut venir buter intérieurement l'épaulement 118, ce bord rabattu délimitant une ouverture 105 par laquelle sort l'extrémité cylindrique 120 de l'embout 50 sur une longueur d'environ 5 mm.

Ainsi, lorsque le tube contact est monté, la gaine 100, en butée contre l'épaulement 92, maintient d'una part las ressorts 97 dans leurs logements respectifs 95 en appui contre les billes 96 et d'autre part l'embout neutralisant 50 en prolongement du corps de tube 80 à l'extrémité antérieure de celui-ci.

En fonctionnement, dans une installation telle que représentée à la figure 1, le tube 25 permet de guider le fil de métal d'apport 23 en le laissant coulisser d'une manière continue et sans à-coup à l'intérieur du canal 52. Le fil est maintenu en bon contact conducteur de l'électricité avec la paroi interne 99 de ce canal à l'opposé des passages 95 par l'appui des billes 96. Ces dernières se soulèvent de leur siège au passage, du fil 23 en comprimant les ressorts 97, provoquant par réaction de ces derniers sur les billes une ferme application du fil 23 contre la paroi 99. Le fil 23 passe dans l'embout céramique 50 de façon à présenter son extrémité consommable 22 de manièie parfaitement rectiligne face à la zone de soudure à la sortie de la buse 13.

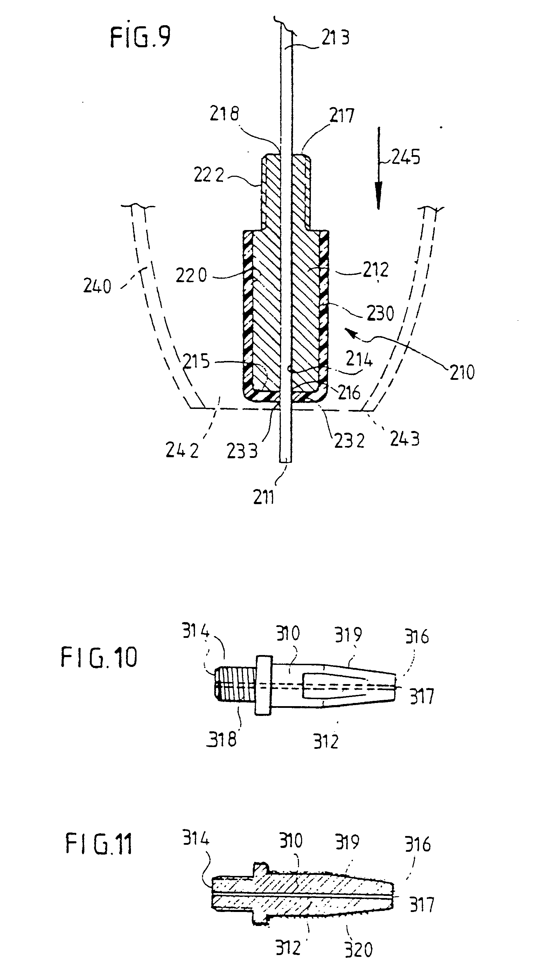

La figure 8 est une vue agrandie du dispositif de rattrapage de jeu à billes qui montre l'une des billes 96-1 en appui sur son siège 130-1 au débouché de l'ouvertuie 95-1 respective dans le canal 82. Dans cette position, elle fait saillie dans le canal 82 sur une profondeur suffisante pour rencontrer un fil 23 de diamètre adapté au tube contact lorsqu'il est introduit dans le canal 82. Comme on l'a représenté, le fil 23 soulève la bille 96-2 de son siège 130-2 en la rapprochant de l'ouverture supériaure 131-2 du passage conique 95-2 dans la surface 90 du tube. Le déplacement des billes de rattrapage de jeu entre les positions illustrées en 96-1 et 96-2 est absorbé par compression des ressorts à spires coniques 97 respectifs. Ca mouvement de compression est rendu possible dans un espace d'épaisseur très petite, vue dans une direction perpendiculaire à l'axe du canal 82, grâce à la conicité du ressort qui permet aux spires de se comprimer en s'interpénétrant de la plus petite vers la plus grande. On a représenté par C et C', sur la figure 5, respectivement la longueur du ressort 97, lui-même non représenté, dans le cas de la bille 96-2 (soulevée) et dans le cas de la bille 96-1, en appui sur son siège. Dans les dimensions courantes de tubes contacts, les valeurs de C et de C' sont relativement petites, de même que l'écart C' - C. Ainsi, par exemple, dans un tube contact dont le diamètre externe ø est de 6 millimètres et destiné à guider un fil de 1,6 millimètre de diamètre ø le diamètre ø du canal 52 est de 2 millimètres. L'épaisseur de la paroi du tube au niveau de la surface 90, qui définit la profondeur des passages 95-1 et 95-2 , est alors de deux millimètres. Le diamètre des billes 96-1 et 96-2 est également de 2 millimètres, le diamètre de siège 130-1 et 130-2 étant de l,5 millimètre. Les valeurs de C et C' sont alors respectivement 0,4 et 0,6 millimètre.

On a résumé dans le tableau ci-dessous des exemples des dimensions d'un dispositif à rattrapage de jeu en référence aux mesures littérales de la figure 8, le diamètre de bille étant de 2 millimètres et celui du siège 130 à l'entrée du canal de l,5 millimètre.

H est la hauteur des ressorts 97 non comprimés et A l'angle de conicité des passages 95.

5

| ⌀ A | ⌀ B | C | C' | ⌀ E | ⌀ F | A | H |
|-----|-----|------|------|------|------|------|------|
| 6 | 2,6 | 0,75 | 0,95 | 1,3 | 0,9 | 20° | 3 |
| 6 | 2,5 | 0,4 | 0,6 | 2 | 1,6 | 20° | 3 |
| 7,2 | 3 | 0,8 | 1 | 2,4 | 2 | 28° | 4 |
| 9,7 | 3,5 | 1,6 | 1,8 | 3,2 | 2,8 | 26° | 4,5 |

Les valeurs sont données en millimètres. Grâce à l'emploi de ressorts 97 coniques, il est possible d'obtenir une force de réaction suffisante pour obtenir un bon contact fil-tube et un débattement suffisant de la bille pour compenser les usures du fil et du dispositif de rattrapage de jeu lui-même pendant une période d'utilisation longue. Ainsi, par exemple, on parvient à comprimer un ressort conique dont la hauteur détendue est de 3 millimètres dans un espace dont l'épaisseur varie entre 0,4 et 0,6 millimètre. Dans une telle position, le ressort comprimé est virtuellement plat, c'est-à-dire que chaque spire inférieure est pratiquement rentrée à l'intérieur de la spire voisine immédiatement supérieure. Dans cet exemple, le nombre de spires du ressort est de trois, le diamètre du fil ressort est de 25/100 mm, le plus petit diamètre interne de spires est de 1 mm et leur plus grand diametre exterieur est de 2,3mm.

Cette disposition permet de loger l'ensemble du dispositif de rattrapage de jeu, billes 96 et ressorts 97, à l'intérieur de la paroi de tube 80 sous la gaine l00, c'est-à-dire sans créer d'excroissances dont la présence à l'extérieur du tube contact pourrait être gênante en raison de sa position à l'intérieur de la buse l3. Les perçages 95 peuvent être réalisés très simplement à l'aide d'un foret d'extrémité conique. L'usinage est donc réduit au minimum pour un dispositif de rattrapage de jeu réalisé sans surépaisseur dans des parois dont l'épaisseur peut descendre jusqu'à l,8 millimètre.

Selon la nature des métaux mis en oeuvre et des dimensions du fil d'apport et du tube contact, on peut prévoir un tel dispositif de rattrapage de jeu comportant une seule bille pour des fils d'apport en métaux doux, par exemple à base d'aluminium. Dans d'autres cas, on peut en prévoir deux comme représenté sur la figure 3, ou davantage.

L'un des principaux avantages d'un dispositif à rattrapage de jeu est de conserver un bon contact électrique entre le fil d'apport 23 et la paroi interne du canal 82 du tube malgré l'usure de cette dernière en cours d'utilisation. On évite en effet de cette manière l'amorçage d'arcs électriques à l'intérieur du tube, avec la formation de cavités et de zones brûlées qui en elles-memes détériorent la qualité du contact et favorisent l'accroissement des possibilités d'amorçage. Avec deux dispositifs à billes tels que représentés, on répartit les efforts d'application du fil d'apport 23 contre la paroi du tube en allongeant la surface de contact et en diminuant la friction génératrice d'usure.

Les billes 96 sont réalisées avantageusement en un matériau électriquement isolant et de préférence dur. On peut utilise à cet effet des billes en verre trempé, en céramique, en rubis ou en saphir synthétique, par exemple, au lieu de billes d'acier ou de graphite. Cette disposition limite les possibilités d'amorçage d'arcs à l'intérieur du tube contact 25. Des billes de rubis, malgré leur coût relativement plus élevé, présentent l'avantage d'une grande dureté favorable à la longévité du tube.

Les ressorts 97 peuvent être réalisés par exemple en acier inoxydable réfractaire ou en Inconel ou en un alliage ni-mo-nick qui résiste aux températures très élevées. Il est en outre avantageux de traiter leur surface avec un revétement tel que du bioxyde de chrome,par exemple à l'aide d'un dispositif de pistolet ou par traitement thermique , de façon à le rendre électriquement isolant. On diminue ainsi encore les possibilités d'amorçage à l'intérieur du tube. La longévité de celui-ci et la qualité de son fonctionnement s'en trouvent améliorés. En effet, outre leurs effets corrodants, les arcs électriques parasites qui peuvent naitre à l'intérieur des tubes contacts de l'art antérieur tendent à gêner l'avance régulière du fil entraînant par là même des perturbations dans l'exécution de la soudure.

La gaine 100 est réalisée par exemple en un acier réfractaire capable de subir des températures aux environs de 1100° sans dommage . Elle est entièrement revêtue, extérieurement et intérieurement, d'un matériau réfractaire électriquement isolant qui, dans cet exemple, est du bioxyde de chrome appliqué par cxcmplc comme il a été exposé cidessus. Grâce à cette disposition, les projections de métal en fusion qui jaillissent du bain de soudure 18 (figure 1) en cours d'opération de soudage et tendent à pénétrer à l'intérieur de la buse 13, n'adhèrent pas sur la gaine 100. On évite ainsi la formation d'accumulations de matières solides sur le tube contact qui risqueraient d'entrainer toutes sortes de perturbations de fonctionnement, par exemple par obturation d'une partie de l'ouverture de soufflage des gaz 16. On évite aussi les amorçages d'arcs parasites entre la surface externe du tube contact 25 et la buse 13. Enfin, la gaine 100 isole thermiquement le corps de tube 80 et notamment le dispositif de rattrapage de jeu.

La buse 13 est elle-même de préférence recouverte d'un revêtement en céramique.

La réalisation illustrée avec l'embout 50 (figures l et 3) présente l'avantage que si, par suite d'un accident, l'extrémité 22 du fil de métal d'apport venait à être bloquée, le métal en fusion qui tend alors à remonter le long du tube contact 25 ne peut y adhérer en raison du coefficient de soudabilité absolument nul de la céramigue formant l'embout 50. L'extrémité de la gaine 100, qui est relativement mince, se trouve ainsi protégée contre les températures extrêmement élevées auxquelles elle risquerait d'être alors soumise, en l'absence de l'embout neutralisant 50.

Selon une forme de réalisation avantageuse, un tel embout 150 présente une extrémité effilée (figure 4). Il est monté à l'extrémité antérieure de la gaine 100 au bout du corps de tube 80. Il comprend une tête cylindrique l52 reliée par un épaulement 153 à un prolongement tronconique 154 d'environ 10 millimètres de long dans cet exemple. L'épaulement 153 est en butée contre le bord rabattu 104 de la gaine et le fil 23 traverse un canal 156 en prolongement du canal 82, l'extrémité 22 du fil faisant saillie hors du canal 156 à l'extrémité effilée 154. On a constaté que cette forme de réalisation de l'enbout 150 était particulièrement efficace lorsqu'on doit opérer la soudure dans des parties en retrait ou des creux tels que 160 dans des pièces à souder 162. En effet, l'embout 150 évite que les accumulations de soudure au fond de l'anfractuosité 160 ne risquent de venir fusionner le fil de métal d'apport avec l'extrémité du tube contact proprement dit. Sa forme effilée facilite en outre le passage des gaz soufflés par la buse dans laquelle est monté le tube contact au fond de la dépression 160 dans laquelle est pratiquée la soudure.

Dans l'exemple de la figure 3, la gaine 100 est solidarisée au corps de tube 80 par sertissage en trois points au niveau de la gorge 93 à la surface 90. Elle assure ainsi à la fois le maintien des ressorts 97 dans leurs logements, de l'embout 50 à l'extrémité antérieure du corps de tube 80 et la protection latérale externe de ce dernier.

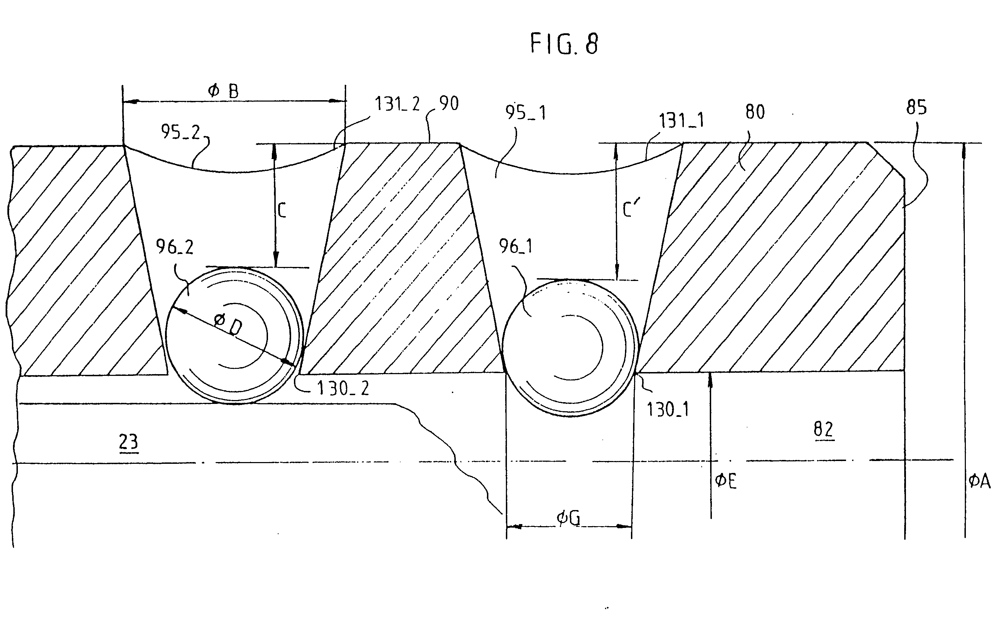

Dans le cas de la figure 6, une gaine de protection latérale externe est un simple manchon 170 constitué et traité comme la gaine 100 et enfilé sur la surface externe 140 d'un corps de tube contact 144 où son extrémité postérieure 146 bute sur un épaulement 148. Un alésage ou perçage 172, de plus grand diamètre que le canal 142, est formé axialement dans la face antérieure 145 du corps de tube 144. Un embout neutralisant 180, traversé par un canal axial 182, est monté à l'extrémité antérieure du tube 144. Il comprend une partie cylindrique 184 logée dans le perçage 172 et reliée par un épaulement 176 à une partie antérieure tronconique 178 effilée vers l'avant, à l'extrémité de laquelle débouche le canal 182. Le plus grand diamètre de la partie conique 178 est égal au diamètre externe du manchon 170. Le bord d'extrémité antérieur 174 du manchon 170 vient buter contre l'épaulement 176 lorsque celui-ci est amené en contact avec la face antérieure 145 du tube 144. L'embout 150 est fixé à l'avant du corps de tube 80 par collage à l'aide d'une colle haute température capable de supporter des températures de 1100°, par exemple la colle commercialisée sous la marque Autostic par la firme Carlton Brown représentée par SERAC, 55 Avenue Anatole France, 92700 COLOMBES; France. Des embouts tels que 50, 150, 150 peuvent être réalisés à l'aide d'une base alumine. Ils sont durs, peu sensibles aux chocs thermiques et totalement isolants sur le plan électrique.

Sur la figure 5, un tel embout 190 comprend une partie cylindrique 192 propre à être emmanchée dans un perçage analogue au perçage 172 du corps de tube 144 sur la figure 6, raccordée à une partie cylindrique de plus grand diamètre 194 qui vient se loger à l'extrémité antérieure d'une gaine telle que 100 (figure 3), et prolongée par une terminaison tronconique 196. Dans la condition assemblée du tube, cette dernière traverse l'ouverture 105 de la gaine 100, la partie rabattue 104 formant butée pour l'epaulement 197 qui raccorde les parties 196 et 194.

Un tube de guidage de fil de métal d'apport pour machine de soudage tel qu'il vient d'être décrit peut avantageusement être utilisé dans d'autres machines de soudage que celle de la figure 1. Dans le cas de la figure 2 par exemple, le tube 78 ne remplit pas de rôle sur le plan électrique. Il permet de guider le fil d'apport 75 de façon à présenter son extrémité 76 dans une position précise dans l'arc électrique et à en assurer une avance sans à-coup.Il est muni d'un embout 79 en céramique propre à éviter les phénomènes de soudure du fil contre le corps du tube contacten cas de blocage accidentel de l'extremité 76. Il est avantageusement revêtu latéralement d'une gaine telle que 100 qui contribue à empêcher tout collage des projections issues du bain de soudure 72 sur le tube 78. Il peut être équipé ou non d'un dispositif de rattrapage de jeu.

Dans le cas de machines de soudage dites sous flux, dans lesquelles, en même temps que le métal d'apport 76, des matériaux pulvérulents sont amenés vers la zone de soudure 72, une protection du corps du tube contact 75 contre les projections n'est pas nécessaire. En effet, les poudres qui ont un rôle soit inerte, soit actif, empêchent les projections.

Un peut alors utiliser un tube contact 200, dont l'extrémité antérieure est représentée (figure 7), et qui comprend un corps de tube métallique 202 percé d'un canal 204 pour l'amenée du fil d'apport. A sa partie antérieure 206, le tube 202 reçoit dans un perçage axial 208 une extrémité postérieure 209 d'un embout 210 dont la partie antérieure 212 est en prolongement de la surface extérieure du corps de tube 202. L'embout 210 est collé à l'extrémité de ce corps par une colle à haute température. Il joue le rôle neutralisant précédemment évoqué en cas de blocage de l'extrémié du fil de métal d'apport. En outre, grâce à sa dureté élevée, le canal de guidage 214 en prolongement du canal 204 résiste bien à l'usure.

Sur la figure 9, un tube contact 210 comprend un corps 212, en cuivre par exemple, traversé par un canal longitudinal cylindrique 214 qui débouche dans sa face avant 215 par une ouverture 218. Le diamètre de ce canal 214 est calibré pour permettre le passage d'un fil 213 de métal d'apport, cylindrique, dont la partie antérieure 211 fait saillie à l'avant de la face 215 en direction d'une pièce à souder.

La surface externe 220 du corps de tube 212 est prolongée, à sa partie postérieure, par une portion filetée 222 de plus petit diamètre. Le tube 210 reçoit un fort courant électrique, par des moyens non représentés.

Autour de la surface 220 et sur sa surface antérieure 215 perpendiculaire à l'axe du tube 214, le corps de tube 212 est garni d'une gaine 230 électriquement et thermiquement isolante. Dans cet exemple, cette gaine est réalisée en fibre de verre tressée antourée d'un revêtement extérieur à base silicone. Cette gaine 230 ast préformée à la dimension du tube 212 et maintenue autour de celui-ci, par exemple par collage, à l'aide d'une colle aux silicones. Son épaisseur peut être, par exemple, de l'ordre du millimetre.

Cette gaine 230 forme un retour 232 le long de la face avant 215 du corps da tube 212, dans laqual alla présenta una ouvartura cantrala 233, qui ansarra la fil d'apport métallique 213. Selon une forme de réalisation, on réalise cette gaine 230 comme une coiffe dont la partie 232 recouvre initialement l'ouverture 216 de sortie du fil 213 à l'avant du corps de tube 212. Au premier emploi, le fond de cette coiffe est percé par l'extrémité 211 du tube du fil 213 enfilé dans le canal 214.

Sur la figure 9, on a représenté en tiret une buse externe 240, coaxiale au tube 212, qui est logé à l'intérieur de cette buse. La buse 240 présente une ouverture 242 au voisinage de laquelle se trouve la partie antérieure 215 du tube 212, de façon à ménager un intervalle annulaire entre les bords 243 de cette ouverture 242 et la gaine 230, par leguel peut s'échapper un gaz circulant à l'intérieur de la buse 240, dans le sens de la fleche 245.

En raison des propriétés électriquement et thermiquement isolantes et anti-adhésives de la gaine 230, les projections qui s'échappent du bain de soudure restent sans effet sur l'avance régulière du fil 213 à la sortie de l'ouverture 216, sur la constance de l'arc principal formé à l'extrémité 211 de ce fil et sur les dimensions de l'intervalle d'échappement des gaz à la sortie de la buse 240. On évite notamment la formation d'arcs parasites entre le tube contact 214 et la buse 240.

Lorsque le tube contact comprend un dispositif de rattrapage de jeu, la gaine 230 présente en outre l'avantage de protéger ce dispositif contre les échauffements excessifs risquant d'affecter les caractéristiques mécaniques des pièces, et notamment des ressorts, constituant ces dispositifs.

Sur la figure 10, un tube contact 310 selon l'art antérieur comprend un corps de forme allongée, en cuivre généralement, percé dans sa partie axiale d'un canal 312 qui s'étend entre son extrémité arriére 314 et sa paroi frontale 316. L'extrémité arriére du tube forme un embout fileté 318. La surface extérieure 319 du tube 310 présente une forme antérieure conique s'amincissant en direction de la face frontale 316. Malgré sa forme légèrement effilée, cette face extérieure, nue, est exposée aux projections à très haute température qui jaillissent du bain de metal en fusion au niveau de la soudure.

Un tube 310 analogue à celui de la figure 10, est représenté en coupe longitudinale sur la figure 11 après que sa surface externe 319 ait fait l'objet d'un traitement par projection de céramique. Celle-ci forme un revêtement externe 320 de 3 à 4 dixièmes de millimètres d'épaisseur, de couleur blanche, qui s'étend jusqu'aux abords immédiats de la sortie 317 du canal 312 dans la partie frontale 316.

Ce revêtement 320 est forme à l'aide, par exemple, d'un pistolet tel que commercialisé par les Etablissements CHPOLANSKI ainsi que par d'autres établissements spécialisés dans le traitement de surface par pulvérisation de divers types de matériaux. Un cordon d'alumine est alimenté au pistolet et brûle par une flamme à haute température. Les produits ainsi enflammés sont projetés à l'aide d'un courant d'air sous pression élevée en direction de la surface à revêtir, celle-ci ayant été préalablement sablée.

Le revêtement 320 réfractaire ainsi obtenu empêche les projections de métal en fusion d'adhéerer au tube contact ou de l'endommager, et notamment de venir détériorer son extrémité frontale 316 au voisinage de la sortie 317 du tube. Il en résulte notamment une diminution de l'usure de la partie frontale 316.

Dans tous les modes de réalisations qui viennent d'être présentés, on peut prévoir de réaliser sur les pièces à protéger un dépôt electrolytique de chrome et de la transformer en bioxyde de chrome par un traitement thermique d'oxydation.

De même, selon une forme d'exécution tout à fait avantageuse sur le plan industriel, on peut réaliser un revêtement d'alumine sur toutes les faces des pièces en effectuant un dépôt électrolytique d'aluminium qui est ensuite oxydé en surface par un traitement électrolytique pour y produire une couche d'alumine hydratée. Le procedé convient notamment à des pièces en cuivre, acier, acier inoxydable réfractaire. Il paut être utilisé avec profit pour le revàtement des gaines de protection des tubes contact, des buses en TIG, MIG et MAG, et des parties mobiles des dispositifs de rattrapage de jeu.

**Revendications**

1. Torche pour une machine de soudage par déchaiges , électriques munie d'un tube de guidage comprenant uncorps métallique (80) présentant un canal longitudinal (82) pour guider un fil de métal d'apport (23) et fournir un courant de soudage au fil de métal d'apport par contact avec les parois dudit canal, ledit canal débouchant dans une face frontale (85) dudit corps métallique, laquelle est recoverte par une pièce (50) en matériau céramique présentant une canal (115) aligné avec le canal (82) dudit corps métallique, ledit matériau céramique étant non adhérent vis-a-vis des projections de métal provenant du bain de soudure se produisant lors du soudage, caractérisée en ce que ladite pièce,dont le canal (115) a le même diamètre que le canal (82) du corps, est maintenue en contact avec ladite face frontale par une gaine protectrice (100) ajustée sur l'extrémité frontale dudit corps, et en ce que le corps métallique (80) comporte des moyens de rattrapage de jeu entre le fil.de métal d'apport et la surface interne du canal (82) pour maintenir un contact à frottement constant entre eux, lesdits moyens comprenant un élément élastique (97) et la gaine couvrant le tube autour desdits moyens et servant de butée pour ledit élément élastique.

2. Torche selon la revendication 1, caractérisée en ce qu'au moins la surface extérieure de ladite gaine (100) est constituée par un matériau réfractaire électriquement isolant.

3. Torche selon la revendication 2, caractérisée en ce que ledit matériau réfractaire est un matériau céramique tel que l'alumine ou le bioxyde de chrome.

4. Torche pour une machine de soudage par décharges électrigues munie d'un tube pour le guidage d'un fil de métal d'apport comprenant un corps tubulaire (80) présentant un canal axial (82) pour guider le fil (23) et des moyens pour presser le fil contre la paroi du canal, lesdits moyens de pression comprenant au moins une bille (96) montée mobile dans un passage (94) du corps tubulaire transversal au canal et débouchant dans le canal et dans la paroi externe (90) du corps, la bille étant sollicitée par des moyens élastiques pour faire saillie dans le canal et appliquer le fil contre la paroi opposée du canal, caractérisée en ce que lesdits moyens élastiques comprennent un ressort de compression conique (97) entièren,ent logé dans ledit passage transversal (95), lequel a une forme tronconique se retrécissant en direction du canal (82) et en ce que ledit passage (95) débouche dans la paroi externe (90) du corps de tube (80) par une ouverture fermée par une gaine enfilée autour du tube, contre laquelle bute la spire d'extrémité large du ressort (97).

5. Torche selon la revendication 4, caractérisée en ce que les spires dudit ressort conique sont aptes à se loger les unes dans les autres.

6. Torche selon l'une des revendications 4 et 5, caractérisée en ce que la bille (96) est en un matériau électriquement isolant au moins à sa surface.

7. Torche selon la revendication 6, caractérisée en ce que la bille (96) est réalisée en un matériau isolant, et de préférence de grande dureté, tel que du verre trempé de la céramique, du rubis ou du saphir synthétique.

8. Torche selon l'une des revendications 4 à 7, caractérisée en ce que la surface externe du ressort (97) est électriquement isolante et par exemple constituée par un revêtement réfractaire tel que de l'alumine ou du bioxyde de chrome.

9.Torche selon l'une des revendications 4 à 8, caractérisée en ce que le tube comprend au moins deux passages (95) logeant chacun une bille (96) et un ressort (97), et alignés longitudinalement le long du corps du tube.

10. Torche pour une machine de soudage par décharge, électriques, comprenant une buse (13) pour diriger un courant de gaz sur une soudure, disposée author d'un tube de guidage qui comprend un corps metallique (310) muni d'un canal longitudinal (312) pour guider un fil de métal d'appoit, ledit canal longitudinal débouchant dans une face frontale (316) dudit tube, le partie avant du corps métalligue étant munie d'un recouvrement de surface protecteur (320) en un matériau non adhérent vis-àvis des projections de métal provenant du bain de soudure lors du soudage, caractérisée en ce que le tube de guidage est contenu à l'intérieur d'une chambre (14) délimitée par la buse (13), et que l'extrémité de cette dernière est rétrécie vers l'intérieur autour de la partie terminale du tube de guidage.

11. Torche selon la revendication 10, caractérisée en ce que ledit matériau est un matériau céramique.

12. Torche selon la revendication 11, caractérisée en ce que ledit matériau est l'alumine.

13. Torche selon la revendication 12, caractérisée en ce gue ledit recouvrement est obtenu par dépôt électrolytique d'une couche d'aluminium sur le corps métallique suivi d'une oxydation électrolytique de ladite couche d'aluminium.

14. Tube de guidage pour une machine de soudage par décharges électriques comprenant un corps métallique (80) présentant un canal longitudinal (82) pour guider un fil de métal d'apport et des moyens pour presser le fil contre la paroi du canal, lesdits moyens de pression comprenant su moins une bille (96) montée mobile dans un passage (95) du corps tubulaire transversal au canel et débouchant dans le canal et dans le paroi externe (90) du corps, la bille étant sollicitée par des moyens élastiques pour faire saillie dans le canal et appliquer le fil contre la paroi opoosée du canal, caractérisé en ce que lesdits moyens élastiques comprennent un ressort de compression conique (97) entièrement logé dans ledit passage transversal (95), lequel à une forme tronconique se rétrécissant en direction du canal (82), et en ce que ledit passege (95) débouche dans la paroi externe (90) du corps de tube (8O) par une ouverture fermée par une gaine enfilée autour du tube, contre laquelle bute la spire d'extrémité large du ressort (97).

15. Tube selon la revendication I4, caractérisé en ce que les spires dudit ressort conique sont aptes à se loger les unes dans les autres.

16. Tube selon l'une des revendications I4 et I5, caractérisé en ce que la bille (96) est en un matériau électriquement isolant su moins à sa surface.

17. Tube selon le revendication I6, caractérisé en ce que la bille (96) est réalisée en un materiau isolant, et de préférence de grande dureté, tel que du verre trempé, de la céramique, du rubis ou du saphir synthétique.

18. Tube selon l'une des revendications 14 à 17, caractérisé en ce que la surface externe du ressort (97) est électriquement isolante et par exemple constituée par un revêtement réfractaire tel que de l'alumine ou du bioxyde de chrome.

19. Tube selon l'une des revendications 14 à 18, caractérisé en ce qu'il comprend au moins deux passages (95) logeant chacun un bille (96) et un ressort (97), et alignés longitudinalement le long du corps du tube.

**Patentansprühe**

1. Schweißbrenner für eine Elektroschweißmaschine einem einen Metallkörper (80) mit darin angeordnetem Längskanal (82) enthaltenden Führungsrohr wobei der Längskanal (82) zur Führung eines Schweißdrahts dient, dem Schweißdraht über den Kontakt mit den Kanalwandungen den Schweißstrom zuführt und in einer

**0 064 891**

Stirnfläche (85) des besagten Metallkörpers endet, die ihrerseits mit einem einen Kanal (115), der mit dem Kanal (82) des Metallkörpers fluchtet, aufweisenden Teil (50) aus einem Keramikmaterial abgedeckt ist, an dem Metallspritzer des sich während des Schweißvorganges bildenden geschmolzenen Metalls nicht haften, dadurch gekennzeichnet, daß das besagte Teil, dessen Kanal (115) denselben Durchmesser aufweist wie der Kanal (82) des Körpers, mittels einer auf dem vorderen Ende des besagten Körpers aufsitzenden Schutzhülse (100) fest an der besagten Stirnfläche gehalten wird und daß der Metallkörper (80) Mittel zum Ausgleich des Spiels zwischen dem Schweißdraht und der inneren Kanalwandung (82) zur Aufrechterhaltung eines ständigen Reibungskontaktes zwischen den beiden Teilen besitzt, wobei diese Mittel aus einem federnden Element (97) und der diese Mittel abdeckenden und dem federnden Element als Widerlage dienenden Schutzhülse bestehen.

2. Schweißbrenner nach Anspruch 1, dadurch gekennzeichnet, daß mindestens die Außenfläche der Schutzhülse (100) aus einem elektrisch isolierenden feuerfesten Material besteht.

3. Schweißbrenner nach Anspruch 2, dadurch gekennzeichnet, daß das feuerfeste Material ein keramisches Material ist, beispielsweise Aluminiumoxid oder Chromdioxid.

4. Schweißbrenner für eine Elektroschweißmaschine mit einem Führungsrohr zur Führung des Schweißdrahtes, bestehend aus einem Rohrkörper (80) mit einem axial verlaufenden Kanal (82) zur Führung des Schweißdrahts (23) und Mitteln zum Andrücken des Schweißdrahtes gegen die Kanalwandung, wobei diese Druckmittel zumindest eine Kugel (96) umfassen, die beweglich in einer sich quer zum Kanal erstreckenden und in den Kanal und die Außenwandung (90) des Körpers mündenden Öffnung (95) des Rohrkörpers sitzt und durch federnde Mittel beaufschlagt und so in den Kanal hineingedrückt wird, daß der Schweißdraht an der gegenüberliegenden Wandung des Kanals zur Anlage kommt, dadurch gekennzeichnet, daß die federnden Mittel aus einer vollständig in der Queröffnung (95) aufgenommenen konischen Druckfeder (97) bestehen, wobei der Querkanal eine sich zum Kanal (52) hin verjüngende Kegelstumpfform aufweist, und daß die Mündung der Öffnung (95) in der Außenwandung (90) des Rohrkörpers (80) durch eine auf das Rohr aufgeschobene Schutzhülse geschlossen wird, an der sich die große Endwindung der Feder (97) abstützt.

5. Schweißbrenner nach Anspruch 4, dadurch gekennzeichnet, daß die Windungen der konischen Feder sich ineinanderschieben können.

6. Schweißbrenner nach Anspruch 4 oder 5, dadurch gekennzeichnet, daß die Kugel (96) mindestens an ihrer Oberfläche aus elektrisch isolierendem Material besteht.

7. Schweißbrenner nach Anspruch 6, dadurch gekennzeichnet, daß die Kugel (96) aus isolierendem, vorzugsweise sehr hartem Material, beispielsweise wärmebehandeltem Glas, Keramik, synthetischem Rubin oder Saphir, hergestellt ist.

8. Schweißbrenner nach einem der Ansprüche 4 bis 7, dadurch gekennzeichnet, daß die äußere Oberfläche der Feder (97) elektrisch isolierend ist und zum Beispiel aus einer feuerfesten Beschichtung, wie Aluminiumoxid oder Chromdioxid, besteht.

9. Schweißbrenner nach einem der Ansprüche 4 bis 8, dadurch gekennzeichnet, daß das Rohr mindestens zwei in Längsrichtung fluchtend auf dem Rohrkörper angeordnete und jeweils eine Kugel (96) und eine Feder (97) aufnehmende Öffnungen (95) besitzt.

10. Schweißbrenner für eine Elektroschweißmaschine mit einem um ein Führungsrohr herum angeordneten Mundstück (13), durch das der Schweißnaht ein Gasstrom zugeführt wird, wobei das Führungsrohr einen mit einem Längskanal (312) zur Führung eines Schweißdrahtes ausgestatteten Metallkörper (310) besitzt und der besagte Längskanal in einer Stirnfläche (316) des besagten Rohres mündet und der vordere Teil des Metallkörpers mit einer Schutzoberfläche (320) aus einem Material versehen ist, an dem Spritzer des während des Schweißens entstehenden geschmolzenen Materials nicht haften, dadurch gekennzeichnet, daß sich das Führungsrohr innerhalb einer vom Mundstück (13) begrenzten Kammer (14) befindet und das Ende des Mundstücks nach innen um das Endstück des Führungsrohrs herum eingezogen ist.

11. Schweißbrenner nach Anspruch 10, dadurch gekennzeichnet, daß das besagte Material ein keramisches Material ist.

12. Schweißbrenner nach Anspruch 11, dadurch gekennzeichnet, daß das besagte Material Aluminiumoxid ist.

13. Schweißbrenner nach Anspruch 12, dadurch gekennzeichnet, daß die besagte Beschichtung durch elektrolytischen Niederschlag einer Aluminiumschicht auf dem Metallkörper und nachfolgender elektrolytischer Oxidation der Aluminiumschicht erzeugt wird.

14. Führungsrohr für eine Elektroschweißmaschine, bestehend aus einem Rohrkörper (80) mit einem axial verlaufenden Kanal (82) zur Führung des Schweißdrahts (23) und Mitteln zum Andrücken des Schweißdrahtes gegen die Kanalwandung, wobei diese Druckmittel zumindest eine Kugel (96) umfassen, die beweglich in einer sich quer zum Kanal erstreckenden und in den Kanal und die Außenwandung (90) des Körpers mündenden Öffnung (95) des Rohrkörpers sitzt und durch federnde Mittel beaufschlagt und so in den Kanal hineingedrückt wird, daß der Schweißdraht an der gegenüberliegenden Wandung des Kanals zur Anlage kommt, dadurch gekennzeichnet, daß die federnden Mittel aus einer vollständig in der Queröffnung (95) aufgenommenen konischen Druckfeder (97) bestehen, wobei der Querkanal eine sich zum Kanal (82) hin verjüngende Kegelstumpfform aufweist, und daß die Mündung der Öffnung (95) in der Außenwandung (90) des Rohrkörpers (80) durch eine auf das Rohr aufgeschobene Schutzhülse geschlossen wird, an der sich die große Endwindung der Feder (97) abstützt.

15. Rohr gemäß Anspruch 14, dadurch gekennzeichnet, daß die Windungen der konischen Feder sich ineinanderschieben können.

16. Rohr nach Anspruch 14 oder 15, dadurch gekennzeichnet, daß die Kugel (96) mindestens an ihrer Oberfläche aus elektrisch isolierendem Material besteht.

17. Rohr nach Anspruch 16, dadurch gekennzeichnet, daß die Kugel (96) aus isolierendem, vorzugsweise sehr hartem Material, beispielsweise wärmebehandeltem Glas, Keramik, synthetischem Rubin oder Saphir, hergestellt ist.

18. Rohr nach einem der Ansprüche 14 bis 17, dadurch gekennzeichnet, daß die äußere Oberfläche der Feder (97) elektrisch isolierend ist und zum Beispiel aus einer feuerfesten Beschichtung, wie Aluminiumoxid oder Chromdioxid, besteht.

19. Rohr nach einem der Ansprüche 14 bis 18, dadurch gekennzeichnet, daß es mindestens zwei in Längsrichtung fluchtend auf dem Rohrkörper angeordnete und jeweils eine Kugel (96) und eine Feder (97) aufnehmende Öffnungen (95) besitzt.

## Claims

I/ A torch for an electric arc welding machine fitted with a guide tube comprising a metal body (80) having a longitudinal channel (82) for Quiding a filler metal wire (23) and for supplying welding current to the filler metal wire by contact with the walls of said channel, said channel opening out in a front face (85) of said metal body, which front face is covered by a part (50) made of ceramic material and having a channel (115) aligned with the channel (82) through said metal body, said ceramic material being non-adhesive relative to metal spattering from the weld bath which occurs during welding, the torch being characterized in that said part whose channel (115) has the same diameter as the channel (82) through the body, is kept in contact with said front face by a protective sheath (100) fitted on the front end of said body, and in that the metal bohdy (80) includes means for taking up play between the metal filler wire and the inside surface of the channel (82) in order to maintain constant friction contact therebetween, said means comprising a resilient member (97) and the sheath covering the tub around said means and serving as an abutment for said resilient member.

2/ A torch according to claim 1, characterized in that at least the outside surface of said sheath (100) is constituted by an electrically insulating refractory material.

3/ A torch according to claim 2, characterized in that said refractory material is a ceramic material such as alumina or chromium dioxide.

4/ A torch for an electric arc welding machine fitted with a tube for guiding filler metal wire comprising a tubular body (80) having an axial channel (82) for guiding the wire (23) and means for pressing the wire against the wall of the channel, said means for pressing the wire comprising at least one ball (96) movably mounted in a transverse passage passing through the tubular body transversely to the channel and opening out into the channel and in the outside wall (90) of the bohdy, the ball being urged by resilient means to project into the channel and to press the wire against the opposite wall of the channel, the torch being characterized in that said resilient means comprise a conical compression spring (97) which is completely housed inside said transverse passsge (95) which is frustoconical in shape an tapers towards the channel (82), and in that said passage (95) opens out into the outer wall (90) of the tubular body (80) via an opening which is closed by a sheath threaded around the tub and against which the end turn of the spring (97) abuts.

5/ A torch according to claim 4, characterized in that the turns of said conical spring are suitable for being received within one another.

6/ A torch according to claim 4 or 5, characterized in that the ball (96) is made of electrically insulating material, at least on its surface.

7/ A torch according to claim 6, characterized in that the ball (96) is made of insulating material which preferably very hard, such as quenched glass, ceramics, synthetic sapphire or ruby.

8/ A torch according to any one of claims 4 to 7, characterized in that the outside surface of the spring (97) is electrically insulating and is constituted, for example, by a refractory coating such as alumina or chromium dioxide.

9/ A torch according to any one of claims 4 to 8, characterized in that the tube includes at least two passages (95), each of which houses a ball (96) and a spring (97), which passages are aligned longitudinally along the body of the tube.

10/ A torch for an electrical arc welding machine, comprising a nozzle (13) for directing a flow of gas onto a weld, said nozzle being disposed around a guide tube which comprises a metal body (310) having a longitudinal channel (312) for guiding a filler metal wire said longitudinal channel opening out into a front face (316) of said tube, the front portion of the metal body being provided with a protective surface covering (520) made of a material which is non-adhesive relative to metal spattering from the weld bath during welding, characterized in that the guide tub is contained inside a chamber (14) delimited by the nozzle (15), and in that the end of said nozzle tapers inwardly around the end portion of the guide tube.

11/ A torch according to claim 10, characterized in that the said material is a ceramic material.

12/ A torch according to claim 11, characterized in that the said material is alumina.

13/ A torch according to claim 12, characterized in that the said covering is obtained by electrolytically depositing a layer of aluminium on the metal body and then electrolytically oxidizing said layer of aluminium.

14/ A guide tube for an electric arc welding machine comprising a metal body (80) having a longitudinal channel (82) for guiding a filler metal wire together with means for pressing the wire against the wall of the channel, said means for pressing the wire comprising at least one ball (96) movably mounted in a transverse passage passing through the tubular body transversely to the channel and opening out into the channel and in the outside wall (90) of the body, the ball being urged by resilent means to project into the channel and to press the wire against the opposite wall of the channel, the tube bing characterized in that said resilent means comprise a conical compression spring (97) which is completely housed inside said transverse passage (95) which is frusto-conical in shape an tapers towards the channel (82), and in that said passage (95) opens out into the outer wall (90) of the tube body (80) via an opening which is closed by a sheath threaded around the tube and against which the end turn of the spring (97) abuts.

15/ A tube according to claim 14, characterized in that the turns of said conical spring are suitable for bing received within one another.

16/ A tube according to claim 14 or 15, characterized in that the ball (96) is made of electrically insulating material, at least on its surface.

17/ A tube according to claim l6, characterized in that the ball (96) is made of insulating material which preferably very hard, such as quenched glass, ceramics, synthetic sapphire or ruby.

18/ A tube according to any one of claims 14 to 17, characterized in that the outside surface of the spring (97) is electrically insulating and is constituted, for example, by a refractory coating such as alumina or chromium dioxide.

19/ A tube according to any one of claims 14 to 18, characterized in that the tub includes at least two passages (95), each of which houses a ball (96) and a spring (97), which passages are aligned longitudinally along the body of the tube.

FIG. 1

FIG. 2

FIG. 3

FIG. 4

FIG. 5

FIG. 6

FIG. 7

# FIG. 8

0 064 891

FIG.9

FIG.10

FIG.11